# EUROPÄISCHE PATENTSCHRIFT

(11) **EP 3 228 197 B1**
(45) Veröffentlichungstag und Bekanntmachung des Hinweises auf die Patenterteilung: **18.08.2021**
(21) Anmeldenummer: 17164555.9
(22) Anmeldetag: 03.04.2017
(51) Int. Cl.: A24C 5/32

(54) **EMPFANGSVORRICHTUNG UND FÖRDERVERFAHREN DER TABAK VERARBEITENDEN INDUSTRIE**
RECEIVING DEVICE AND TRANSPORT METHOD FOR THE TOBACCO PROCESSING INDUSTRY
DISPOSITIF DE RÉCEPTION ET PROCÉDÉ DE TRANSPORT DE L'INDUSTRIE DU TABAC

(30) Priorität: 05.04.2016 DE 102016205630
(43) Veröffentlichungstag der Anmeldung: 11.10.2017
(73) Patentinhaber: Hauni Maschinenbau GmbH, 21033 Hamburg (DE)
(72) Erfinder: HARTMANN, Florian, 21502 Geesthacht (DE)
(74) Vertreter: Seemann & Partner Patentanwälte mbB

(56) Entgegenhaltungen:
- EP-A1- 1 038 452
- EP-B1- 2 005 848
- DE-A1- 2 926 792
- DE-A1- 4 431 273

## Beschreibung

Die Erfindung betrifft eine Empfangsvorrichtung einer Fördereinrichtung für den Transport von mit Druckluft geförderten Filterstäben der Tabak verarbeitenden Industrie, wobei die Empfangsvorrichtung eine Bremsvorrichtung aufweist, die die Filterstäbe abbremst, und eine Beschleunigungsvorrichtung aufweist, die die Filterstäbe beschleunigt, wobei die Beschleunigungsvorrichtung in einer Förderrichtung der Filterstäbe stromabwärts der Bremsvorrichtung angeordnet ist.

Die Erfindung betrifft ferner ein Verfahren zum Transportieren von mit Druckluft geförderten Filterstäben der Tabak verarbeitenden Industrie, wobei die Filterstäbe längsaxial in eine Bremsvorrichtung gefördert werden und anschließend in der Bremsvorrichtung abgebremst werden, wobei die Filterstäbe anschließend mittels einer Beschleunigungsvorrichtung in längsaxialer Förderrichtung beschleunigt werden.

Eine entsprechende Empfangsvorrichtung sowie ein entsprechendes Förderverfahren sind beispielsweise aus EP 1 397 968 B1 und EP 2 005 848 B1 bekannt. Ein entsprechender Filterstabempfänger bzw. eine entsprechende Empfangsvorrichtung für stabförmige Artikel der Tabak verarbeitenden Industrie wie Filterstäbe empfängt üblicherweise längsaxiale Artikel, die zunächst abgebremst werden, um dann längsaxial beschleunigt zu werden. Anschließend werden einem Filtermagazin die Artikel queraxial zugeführt. Hierbei sind verschiedene Modulvarianten bekannt. Es existieren beispielsweise Einzelempfänger, Doppelempfänger und Dreifachempfänger. Es ist auch möglich, in Abhängigkeit des Bedarfs an Artikeln die Geschwindigkeit des Filterstab-Empfängers bzw. der Empfangsvorrichtung zu regeln.

In DE 29 26 792 A1 ist eine Empfangsstation einer pneumatischen Förderstrecke für den Transport von stabförmigen Artikeln der Tabak verarbeitenden Industrie in längsaxialer Richtung offenbart. Diese führt zu einer Umlenkeinrichtung, in der Artikel aus einer längsaxialen in eine queraxiale Förderrichtung umgelenkt werden. Die Empfangsstation weist eine Bremsvorrichtung auf, die den Filterstäben im Eingriffsbereich permanent Energie entzieht und damit abbremst sowie eine Beschleunigungsvorrichtung, die die queraxial geförderten Artikel anschließend wieder kontrolliert beschleunigt.

EP 2 005 848 B1 offenbart eine Empfangsvorrichtung einer Fördereinrichtung für den Transport von mit Druckluft geförderten stabförmigen Filterstäben der Tabak verarbeitenden Industrie und ein entsprechendes Verfahren zum Fördern von mit Druckluft geförderten stabförmigen Filterstäben der Tabak verarbeitenden Industrie. Hierbei besteht die Bremsvorrichtung aus einer ersten Bremseinrichtung, die aus einem Bremsrollenpaar besteht. Zudem ist eine weitere Bremseinrichtung vorgesehen, die den Filterstäben im Eingriffsbereich der weiteren Bremseinrichtung permanent Energie entzieht, wobei die weitere Bremseinrichtung federnd gegen die Filterstäbe drückende Elemente vorsieht.

In DE 44 31 273 A1 ist eine Vorrichtung zum Fördern von stabförmigen Artikeln der Tabak verarbeitenden Industrie gezeigt, in der die stabförmigen Artikel in zwei parallelen Bahnen durch Bremsrollenpaare abgebremst und durch Beschleunigungsrollenpaare wieder beschleunigt werden.

EP 1 038 452 A1 zeigt eine Einrichtung zum Überführen von Filterstäben, bei denen die Filterstäbe mittels mit endlosen Riemen versehenen Bremsmitteln abgebremst werden.

Es ist Aufgabe der vorliegenden Erfindung, die Betriebssicherheit einer Empfangsvorrichtung einer Fördereinrichtung für den Transport von stabförmigen Artikeln der Tabak verarbeitenden Industrie, insbesondere von Filterstäben, sowie bei einem Verfahren zum Fördern von stabförmigen Artikeln der Tabak verarbeitenden Industrie zu erhöhen, wobei zudem insbesondere eine sehr schonende Behandlung der stabförmigen Artikel der Tabak verarbeitenden Industrie, insbesondere der Filterstäbe, ermöglicht sein soll.

Gelöst wird diese Aufgabe durch eine Empfangsvorrichtung einer Fördereinrichtung für den Transport von mit Druckluft geförderten Filterstäben der Tabak verarbeitenden Industrie, wobei die Empfangsvorrichtung eine Bremsvorrichtung aufweist, die die Filterstäbe abbremst, und eine Beschleunigungsvorrichtung aufweist, die die Filterstäbe beschleunigt, wobei die Beschleunigungsvorrichtung in einer Förderrichtung der Filterstäbe stromabwärts der Bremsvorrichtung angeordnet ist, wobei die Bremsvorrichtung mindestens zwei Bremseinrichtungen aufweist, die dadurch weitergebildet ist, dass die Bremseinrichtungen so ausgebildet sind, dass sie die Filterstäbe aktiv abbremsen, wobei die Bremsvorrichtung zwei Bremsrollenpaare umfasst, wobei ein erstes Bremsrollenpaar stromaufwärts eines zweiten Bremsrollenpaares angeordnet ist und die beiden Bremsrollenpaare jeweils eine vorgebbare Umfangsgeschwindigkeit der Bremsrollen aufweisen, wobei die Umfangsgeschwindigkeit der Bremsrollen bei beiden Bremsrollenpaaren im Wesentlichen gleich oder gleich ist und die Bremsrollenpaare so angeordnet sind, dass jeweils ein Filterstab zeitweise gleichzeitig im Eingriff mit dem ersten und dem zweiten Bremsrollenpaar ist.

Hierbei werden die Filterstäbe insbesondere vor der Empfangsvorrichtung und insbesondere in der Empfangsvorrichtung längsaxial gefördert.

Bei dem Transport von mit Druckluft geförderten stabförmigen Filterstäben der Tabak verarbeitenden Industrie können in der Empfangsvorrichtung entsprechende Probleme auftreten, wenn beispielsweise ein Filterstab in dem ersten Bremsrollenpaar gerade noch gefördert wird, und zwar dann, wenn in diesem Moment ein weiterer Filterstab in die Empfangsvorrichtung und insbesondere das erste Bremsrollenpaar trifft. In diesem Fall wird die kinetische Energie bzw. der Impuls in den noch im ersten Bremsrollenpaar befindlichen Filterstab von dem ankommenden Filterstab übertragen. Hierdurch kann der in Förderrichtung stromabwärts liegende Filterstab aus dem Bremsrollenpaar herausgeschossen werden, was zu undefinierten Geschwindigkeiten zwischen der Bremsvorrichtung und der Beschleunigungsvorrichtung führen kann. Hierzu wurde im Stand der Technik beispielsweise in der EP 2 005 848 B1 durch eine weitere Bremsvorrichtung, die als mechanische Bremsvorrichtung ausgebildet ist und federnd gegen einen Filterstab drückende Elemente umfasst, versucht, kinetische Energie von den Filterstäben zu entziehen.

Der Nachteil des bekanntes Standes der Technik ist, dass die federnd gegen die Filterstäbe drückenden Elemente der weiteren Bremseinrichtung nur ein passives Abbremsen der Filterstäbe ermöglichen, d.h. sobald die Filterstäbe mit einer Energie in den Eingriffsbereich der weiteren Bremseinrichtung gelangen, die höher ist als die Energie, die maximal über die federnden Elemente aus den Filterstäben entzogen werden kann, werden die Filterstäbe nicht mehr ausreichend abgebremst. Dies kann z.B. bei einem Produktwechsel auftreten. Insbesondere tritt es aber auf, wenn die federnden Elemente abgenutzt sind. Da die federnden Elemente ständig in Eingriff mit den Filterstäben sind, tritt diese Abnutzung relativ schnell auf, so dass die federnden Elemente häufig ausgewechselt werden müssen.

Die bekannte erste Bremsvorrichtung besteht aus einem Bremsrollenpaar, dessen Drehgeschwindigkeit einstellbar ist, wodurch die Höhe der Energie, die aus dem Filterstab entzogen wird, aktiv einstellbar ist. Bei der vorliegenden Erfindung ist erkannt worden, dass es vorteilhaft ist, die bislang bekannte passive Bremseinrichtung gegen eine aktive Bremseinrichtung auszutauschen, da auf diese Weise auch bei der weiteren Bremseinrichtung die Höhe der zu entziehenden Energie aktiv eingestellt werden kann. Eine aktive Bremseinrichtung ist insbesondere eine Bremseinrichtung, die die jeweiligen Filterstäbe auf eine definierte und vorbestimmte Geschwindigkeit abbremst.

Gemäß einer vorteilhaften Ausgestaltung der Empfangsvorrichtung ist nun vorgesehen, zwei Bremsscheibenpaare hintereinander vorzusehen. Bei dem kritischen Fall, in dem ein neu ankommender Filterstab auf den noch im ersten Bremsrollenpaar befindlichen Filterstab auftritt, kann der Impuls des ankommenden Filterstabs diesen nicht weit fördern, sondern dieser bleibt zumindest im Eingriff mit dem zweiten Bremsrollenpaar oder wird sicher im zweiten Bremsrollenpaar abgebremst, so dass eine definierte und eine sehr schonende Abbremsung des in der Bremsvorrichtung befindlichen Filterstabes ermöglicht ist.

Die Verwendung eines Bremsrollenpaares als weitere Bremseinrichtung bietet zudem den Vorteil, dass sie gegenüber den bekannten federnden Elementen der passiven Bremseinrichtung deutlich weniger abnutzt und die Verwendungsdauer der weiteren Bremseinrichtung deutlich erhöht wird.

Die Bremseinrichtung(en) kann/können ferner beispielsweise als Saugrollen ausgestaltet sein. Die Filterstäbe werden bei einer solchen Ausführungsform von den als Saugrollen ausgestalteten Bremsrollen angesaugt. So wird vorteilhaft dem jeweiligen Filterstab sehr effektiv eine Transportgeschwindigkeit aufgezwungen, die durch die Rotationsgeschwindigkeit der Bremsrollen vorgegeben ist. Es ist in diesem Zusammenhang ebenso vorgesehen, eine einzige Bremsrolle, die als Saugrolle ausgestaltet ist, als Bremseinrichtung vorzusehen. Auf ein Rollenpaar kann also ggf. verzichtet werden.

Die Bremseinrichtung(en) ist/sind ferner (ein) insbesondere rotierend angetriebene(s) Bremselement(e). Neben Rollen sind beispielsweise Bänder bzw. Transportbänder denkbar. Die Umfangsgeschwindigkeit dieser Bremselemente ist vorgebbar, so dass den Filterstäben eine bestimmte Transportgeschwindigkeit aufgezwungen wird.

Erfindungsgemäß weisen die beiden Bremsrollenpaare jeweils eine vorgebbare Umfangsgeschwindigkeit der Bremsrollen auf. Bei der Umfangsgeschwindigkeit ist insbesondere die Geschwindigkeit des Umfangs der Flächen der Bremsrollen gemeint, die der Förderfläche bzw. der Bremsfläche entspricht, die also mit den Filterstäben in Kontakt kommen.

Erfindungsgemäß ist die Umfangsgeschwindigkeit der Bremsrollen bei beiden Bremsrollenpaaren im Wesentlichen gleich. Dieses ist insbesondere dann bevorzugt, wenn die beiden Bremsrollenpaare dicht beieinander angeordnet sind. In diesem Fall können nämlich in gewissen Förder- bzw. Transportphasen eines Filterstabes beide Bremsrollenpaare in Eingriff mit dem Filterstab sein. Um einen schonenden Transport der Filterstäbe in der Empfangsvorrichtung zu gewährleisten, ist es vorgesehen, dass die Umfangsgeschwindigkeit der Bremsrollen beider Bremsrollenpaare im Wesentlichen gleich oder vollständig gleich ist.

In einer alternativen, nicht von der Erfindung umfassten Ausgestaltung, ist die Umfangsgeschwindigkeit der Bremsrollen des ersten Bremsrollenpaares größer als die Umfangsgeschwindigkeit der Bremsrollen des zweiten Bremsrollenpaares, wobei der Abstand der Bremsrollenpaare größer oder gleich zu einer Länge eines Filterstabs ist, der mittels der Empfangsvorrichtung förderbar ist.

Diese Ausgestaltung hat den Vorteil, dass die in der Empfangsvorrichtung ankommenden Filterstäbe sukzessive abgebremst werden können, wodurch eine besonders schonende Behandlung möglich ist. Insbesondere können auch mehrere Bremsrollenpaare als zwei Bremsrollenpaare hintereinander angeordnet sein, um so ein sehr sanftes Abbremsen der Filterstäbe zu ermöglichen. Hierbei können die Umfangsgeschwindigkeiten der jeweiligen Bremsrollen der Bremsrollenpaare in Förderrichtung stromabwärts immer geringer werden.

Vorzugsweise ist der Abstand der Bremsrollenpaare einstellbar, wodurch eine gute Anpassbarkeit an verschieden lange Filterstäbe möglich ist.

Wenn vorzugsweise die Drehachsen der Bremsrollen des ersten Bremsrollenpaares und die Drehachsen der Bremsrollen des zweiten Bremsrollenpaares parallel zueinander sind, kann eine sehr platzsparende Empfangsvorrichtung realisiert werden.

Wenn vorzugsweise die Drehachsen der Bremsrollen des ersten Bremsrollenpaares und die Drehachsen der Bremsrollen des zweiten Bremsrollenpaares quer zueinander, insbesondere senkrecht zueinander, angeordnet sind, ist eine noch schonendere Behandlung der Filterstäbe möglich.

Vorzugsweise weisen die Bremsrollen des ersten Bremsrollenpaares erste Kontaktflächen und die Bremsrollen des zweiten Bremsrollenpaares zweite Kontaktflächen auf, wobei die Kontaktflächen eine Rauheit mit einer gemittelten Rautiefe von weniger als 200 µm, insbesondere weniger als 100 µm, aufweisen. Die Rauheit kann auch zwischen 10 µm und 70 µm liegen. Vorzugsweise ist die Rauheit der ersten Kontaktflächen kleiner als die Rauheit der zweiten Kontaktflächen. Hierbei kann somit beim Abbremsen des Filterstabes in dem ersten Bremsrollenpaar ein gewisser Schlupf gestattet sein, da durch die etwas höhere Rauheit der zweiten Kontaktflächen der Bremsrollen im zweiten Bremsrollenpaar eine ganz sichere Abbremsung gewährleistet ist. Insgesamt kann allerdings auch die Rauheit der zweiten Kontaktflächen der Bremsrollen des zweiten Bremsrollenpaares kleiner sein als die Rauheit der Kontaktflächen von Bremsrollen eines Bremsrollenpaares des Standes der Technik. Üblicherweise sind hier nämlich Werte von R_{z} = 300 µm vorgesehen. Die entsprechenden Kontaktflächen sind im Stand der Technik üblicherweise beschichtet. Bei sehr geringen Rauheiten kann die Beschichtung wegfallen und eine schlichte Oberflächenbearbeitung der Kontaktflächen der Bremsrollen geschehen bzw. die entsprechend durch Fräsen oder Drehen hergestellten Bremsrollen ohne weitere Oberflächenbehandlung benutzt werden, wodurch eine sehr schnelle und effiziente Herstellung der Bremsrollen und damit eine kostengünstige Herstellung möglich ist.

Alternativ kann auch eine gummierte Oberfläche als Kontaktfläche der Bremsrollen vorgesehen sein.

Vorzugsweise ist eine Einrichtung zur Förderung von Filterstäben der Tabak verarbeitenden Industrie zu einem Artikelmagazin mit einer erfindungsgemäßen oder bevorzugt ausgeführten Empfangsvorrichtung versehen.

Die Aufgabe wird ferner durch ein Verfahren zum Transportieren von mit Druckluft geförderten Filterstäben der Tabak verarbeitenden Industrie gelöst, wobei die Filterstäbe längsaxial in eine Bremsvorrichtung gefördert werden, und anschließend in der Bremsvorrichtung abgebremst werden, wobei die Filterstäbe anschließend mittels einer Beschleunigungsvorrichtung in längsaxialer Förderrichtung beschleunigt werden, das dadurch weitergebildet ist, dass in der Bremsvorrichtung die Filterstäbe von einem ersten Brennrollenpaar auf eine erste vorbestimmte Geschwindigkeit abgebremst werden und anschließend von einem zweiten Bremsrollenpaar auf eine zweite vorbestimmte Geschwindigkeit gebracht werden, wobei die erste vorbestimmte Geschwindigkeit und die zweite vorbestimmte Geschwindigkeit im Wesentlichen gleich sind und jeweils ein Filterstab zeitweise gleichzeitig im Eingriff mit dem ersten und dem zweiten Bremsrollenpaar ist.

Durch das erfindungsgemäße Verfahren ist ein sehr effizienter und schonender Transport von Filterstäben möglich.
Gemäß einer nicht von der Erfindung umfassten Ausgestaltung ist die erste vorbestimmte Geschwindigkeit größer als die zweite vorbestimmte Geschwindigkeit. Diese Variante findet insbesondere dann Verwendung, wenn der Abstand des ersten Bremsrollenpaars und des zweiten Bremsrollenpaars größer oder gleich der Länge eines zu transportierenden oder eines transportierten Filterstabs ist.

Für den Fall der im Wesentlichen gleichen oder vollständig gleichen Geschwindigkeit der ersten und der gleichen vorbestimmten Geschwindigkeit ist es erfindungsgemäß vorgesehen, dass jeweils ein Filterstab zeitweise gleichzeitig im Eingriff mit dem ersten und dem zweiten Bremsrollenpaar ist.

Gemäß einer nicht von der Erfindung umfassten Ausgestaltung sind das erste und das zweite Bremsrollenpaar so weit voneinander beabstandet, dass ein Bremsrollenpaar nur einen Filterstab im Eingriff hat oder haben kann. In diesem Fall wird vorzugsweise, wie eben erwähnt, die erste vorbestimmte Geschwindigkeit größer sein als die zweite vorbestimmte Geschwindigkeit.

Die Erfindung löst das Problem, bei einer Empfangsvorrichtung einer Fördereinrichtung für den Transport von mit Hochdruck geförderten Filterstäben der Tabak verarbeitenden Industrie, die längsaxial zu der Empfangsvorrichtung hingefördert werden, für einen sicheren und sanften Transport der Filterstäbe zu sorgen. Das Problem ist, dass die Filterstäbe an der Empfangsvorrichtung nicht mit einem exakten konstanten Abstand zueinander ankommen.

Der darauf folgende Längstransport in der Empfangsvorrichtung hat üblicherweise die Aufgabe, eine definierte Geschwindigkeit der Filterstäbe herzustellen. Außerdem soll eine definierte minimale Lücke zwischen zwei aufeinander folgenden Filterstäben bereitgestellt werden. Sofern dieses nicht erfolgt, kommt es zu Fehlfunktionen im darauf folgenden weiteren Prozess, beispielsweise zu einem Modulstau. Das übliche Herstellen der definierten Geschwindigkeit geschieht über zwei Bremsscheiben oder Bremsrollen, die sich mit einer konstanten Drehzahl drehen und ihre Geschwindigkeit über Reibschluss auf den Filterstab übertragen.

Zur Herstellung bzw. zum Erstellen einer definierten minimalen Lücke wird ein zweites Scheibenpaar oder Rollenpaar benutzt. Diese Rollen werden Beschleunigerrollen genannt. Sie drehen sich schneller als das erste Rollenpaar und ziehen so eine definierte Lücke zwischen den Filterstäben.

Bei diesem Prozess gibt es einen kritischen Augenblick, und zwar den, in dem ein Filterstab gerade noch mit seinem Heck im Bremsrollenpaar gehalten wird. Kommt in diesem Moment der nächste Filterstab mit seiner höheren Geschwindigkeit an und trifft auf den ersten Filterstab, so wird dessen Impuls übertragen, so dass der erste Filterstab aus dem Bremsrollenpaar herausgeschossen wird. Von diesem Moment an ist dieser Filterstab schneller als er sein sollte, was zur Folge hat, dass er zu früh bei den Beschleunigerrollen ankommt und die Lücke zu klein ist. Um dieses zu vermeiden, wurde im Stand der Technik, beispielsweise in EP 2 005 848 B1, eine weitere Bremsvorrichtung in einigen speziellen Ausführungsformen vorgesehen, wobei die weitere Bremsvorrichtung eine Fördergeschwindigkeitsbegrenzungsvorrichtung ist, die mechanisch so wirkt, dass die zweite Bremsvorrichtung federnd gegen einen Filterstab drückende Elemente umfasst.

Um die Förderung der Filterstäbe in der Empfangsvorrichtung noch genauer, gezielter und schonender zu ermöglichen, ist gemäß der Erfindung vorgesehen, ein weiteres Bremsrollenpaar zwischen dem ersten Bremsrollenpaar und dem Beschleunigerrollenpaar bzw. der Beschleunigungsvorrichtung vorzusehen. Insbesondere hat dieses den Vorteil gegenüber dem Stand der Technik, dass die zuverlässige Funktion nicht maßgeblich vom Operator abhängt. Bei der erfindungsgemäßen Lösung werden die Bremsrollen des ersten Bremsrollenpaares und des zweiten Bremsrollenpaares mit der gleichen oder im Wesentlichen gleichen Drehzahl angetrieben. Dadurch kann ein Herausschießen des von dem ersten Bremsrollenpaar im Heck gehaltenen Filterstabs durch einen weiteren ankommenden Filterstab nicht dazu führen, dass der Filterstab vollständig aus der Bremsvorrichtung herausgeschossen wird, da dieser noch in dem zweiten Bremsrollenpaar gehalten wird.

In einer nicht von der Erfindung umfassten Ausführungsform sind die Bremsrollenpaare so weit voneinander entfernt, dass ein Filterstab nicht gleichzeitig von beiden Bremsrollenpaaren gehalten wird. Dies hat den Vorteil, dass das Abbremsen in dem ersten Bremsrollenpaar schonender geschehen kann als im Stand der Technik, da ja noch wenigstens ein weiteres Bremsrollenpaar oder noch weitere Bremsrollenpaare vorgesehen sein können, die eine weitere Abbremsung ermöglichen.

Insbesondere kann die Oberflächenrauheit der Kontaktflächen der Bremsrollen mit dem jeweiligen Filterstab im Vergleich zum Stand der Technik deutlich reduziert werden, wodurch auch eine sehr schonende Behandlung der Filterstäbe möglich ist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Seitenansicht einer Empfangsvorrichtung gemäß dem Stand der Technik,
- Fig. 2: eine schematische Schnittdarstellung durch eine Bremsrolle,
- Fig. 3: eine schematische Seitenansicht einer erfindungsgemäßen Empfangsvorrichtung in einer ersten Ausführungsform,
- Fig. 4: eine schematische Seitenansicht einer erfindungsgemäßen Empfangsvorrichtung in einer zweiten Ausführungsform und
- Fig. 5: eine schematische Seitenansicht einer erfindungsgemäßen Empfangsvorrichtung in einer dritten Ausführungsform.

In den Zeichnungen sind jeweils gleiche oder gleichartige Elemente und/oder Teile mit denselben Bezugsziffern versehen, so dass von einer erneuten Vorstellung jeweils abgesehen wird.

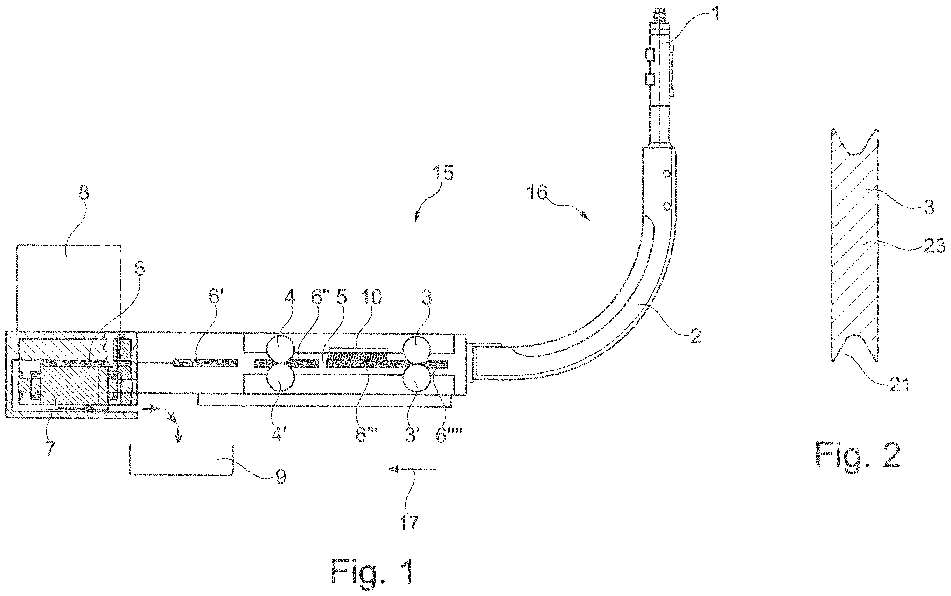

Fig. 1 zeigt eine schematische Seitenansicht einer Empfangsvorrichtung 15 zur Förderung von Filterstäben 6, 6', 6", 6"', 6"".

Filterstäbe 6 - 6'''' werden über eine pneumatische Fördereinrichtung 16 in Förderrichtung 17 über eine Rohrleitung von einer Filterherstellmaschine mittels eines Filterelementsenders einer Anschlussleitung 1 zugeführt. Die Rohrleitung und auch der Filterelementsender bzw. Filterstabsender sind in Fig. 1 nicht dargestellt. Die Filterelemente 6 - 6"", die beabstandet in dem Zuführrohr zur Anschlussleitung 1 gefördert werden, gelangen dann in eine Bogenführung 2, um mittels Bremsrollen 3, 3' in einem Kanal 5 abgebremst zu werden.

Anschließend werden die Filterelemente 6 - 6'''' mittels Beschleunigerrollen 4, 4' über eine nicht dargestellte Führung in eine Trommel 7 gefördert. Die Trommel 7 und die weiteren Elemente dazu sind näher in der EP 1 397 968 B1 beschrieben. Es ist in Fig. 1 dargestellt, dass ein Filterstab 6 in der Trommel 7 aufgenommen ist, um in das Magazin 8 queraxial abgefördert zu werden. Es werden auch Untersuchungen an dem Filterstab 6 vorgenommen, um festzustellen, ob dieser beispielsweise beschädigt ist. Sofern der Filterstab 6 beschädigt ist, wird dieser in einen Auffangbehälter 9 abgegeben, wie dieses in Fig. 1 schematisch dargestellt ist.

Die in das Filterelementmagazin 8 eingeführten Filterelemente 6 - 6'''' dienen dazu, weiterverarbeitet zu werden. Beispielsweise werden diese, nachdem diese in Filterelemente zweifacher Gebrauchslänge geschnitten wurden, mit zwei Tabakstöcken einfacher Gebrauchslänge zusammengeführt, um Filterzigaretten herzustellen. Die entsprechend in das Filterelementmagazin 8 zugeführten Filterstäbe 6 - 6'''' können auch dazu dienen, in entsprechende Filtersegmente zerschnitten und einer Anordnung von Filtersegmenten zur Herstellung von Multisegmentfiltern zugeführt zu werden. Die erfindungsgemäße Vorrichtung kann hier zu mehreren oder sämtlichen Funktionseinheiten einer Einrichtung zum Zusammenstellen von Gruppen und Filtersegmenten zur Herstellung von Multisegmentfiltern der Tabak verarbeitenden Industrie gemäß der DE 101 55 292 A1 der Anmelderin zugeordnet werden.

Gemäß der Fig. 1 und dem Stand der Technik (EP 2 005 848 B1) hat der Längstransport von Filterstäben 6 - 6'''' in einer Empfangsvorrichtung 15, die Bestandteil einer Fördereinrichtung 16 ist bzw. in Förderrichtung 17 im Anschluss an die Fördereinrichtung 16 angeordnet ist, die Aufgabe, die in undefinierten Zuständen aus der Rohrleitung, die stromaufwärts der Anschlussleitung 1 angeordnet ist, in die Empfangsvorrichtung 15 einlaufenden Filterstäbe 6 - 6'''' in ihrer Geschwindigkeit zu vergleichmäßigen und eine für den Quer-Abtransport erforderliche Lücke herzustellen.

Hierzu werden die Filterstäbe 6 - 6'''' von dem Bremsrollenpaar 3, 3' zunächst auf eine definierte Bremsgeschwindigkeit V_{Brems} gebracht. Mit dieser Geschwindigkeit werden die Filterstäbe 6 - 6'''' bis zu den Beschleunigerrollen 4, 4', die als Beschleunigerrollenpaar 33 ausgebildet sind, bewegt. Beim Beschleunigerrollenpaar 4, 4' werden die Filterstäbe 6 - 6'''' auf eine Beschleunigungsgeschwindigkeit V_{Beschleunigung} gebracht und bewegen sich damit von den nachfolgenden, langsamen Filterstäben 6'" und 6'''' weg. In diesem Fall, siehe Fig. 1, bewegen sich die Filterstäbe 6' und 6" mit der entsprechenden Geschwindigkeit weg. Hierdurch wird eine Lücke gezogen, die für den queraxialen Transport der Filterstäbe 6 - 6"" in der Trommel 7 notwendig ist.

Das Bremsrollenpaar 3, 3' und das Beschleunigerrollenpaar 4, 4' haben einen Abstand voneinander, der auf jeden Fall größer sein muss als der längste zu verarbeitende Filterstab, der beispielsweise eine Länge von 180 mm haben kann. Der Filterstab darf nicht gleichzeitig von den Brems- und Beschleunigerrollen gegriffen werden.

Bei der Verarbeitung von kurzen Filterstäben 6 - 6'''' kann es aufgrund des Abstandes der Bremsrollen 3 - 3''' und der Beschleunigerrollen 4, 4' zueinander dazu führen, dass es frei fliegende Filterstäbe gibt, die weder von den Bremsrollen 3, 3' noch von den Beschleunigerrollen 4, 4' gehalten werden. In diesem Fall können Einflüsse aus der Rohrleitung dazu führen, dass Stöße aus der Rohrleitung in Form eines Impulses auf einen frei fliegenden Filterstab, in diesem Fall auf den Filterstab 6''', übertragen werden, der in diesem Fall seine Geschwindigkeit vergrößern würde, was dazu führen kann, dass eine nicht ausreichende Lücke gezogen wird und in Folge daraus eine Störung entsteht.

Um dies zu vermeiden, ist in Fig. 1 eine Fördergeschwindigkeitsbegrenzungsvorrichtung 10 in Form einer Bürste vorgesehen, die mechanisch gegen die Filterstäbe, und in diesem Fall gegen den Filterstab 6''', drückt, um eine zu hohe Geschwindigkeitsaufnahme zu verhindern.

Fig. 2 zeigt schematisch eine Bremsrolle 3 in einer Schnittdarstellung. Die Bremsrolle 3 hat eine Drehachse 23, um die sich die Bremsrolle 3 dreht, und eine erste Kontaktfläche 21, die V-förmig mit einer abgerundeten inneren Nut ausgestaltet ist. Durch diese Ausgestaltung der Bremsrolle 3 können bei einem entsprechenden Bremsrollenpaar in das Bremsrollenpaar hineingelangende Filterstäbe sicher abgebremst werden, ohne dabei eine zu starke Verformung zu erfahren. Insbesondere können die Filterstäbe 6 - 6'''' sich zu den Nuten der Bremsrollen 3 und 3' ausdehnen und zudem auch in einen Raum zwischen den Bremsrollen 3 und 3' ausdehnen. Hierzu sind die Bremsrollen 3 und 3' in einem Abstand zueinander angeordnet, so dass diese sich nicht berühren, sondern einen entsprechenden vorbestimmbaren bzw. einstellbaren Abstand voneinander haben. Die so entstehende Lücke dient somit einer schonenden Behandlung der Filterstäbe 6 - 6"". Um die Filterstäbe 6 - 6'''' sicher zu greifen, ist die erste Kontaktfläche 21 mit einer Beschichtung versehen, die eine entsprechende Rauheit, beispielsweise mit einer gemittelten Rautiefe (R_{z}) von 200 aufweist.

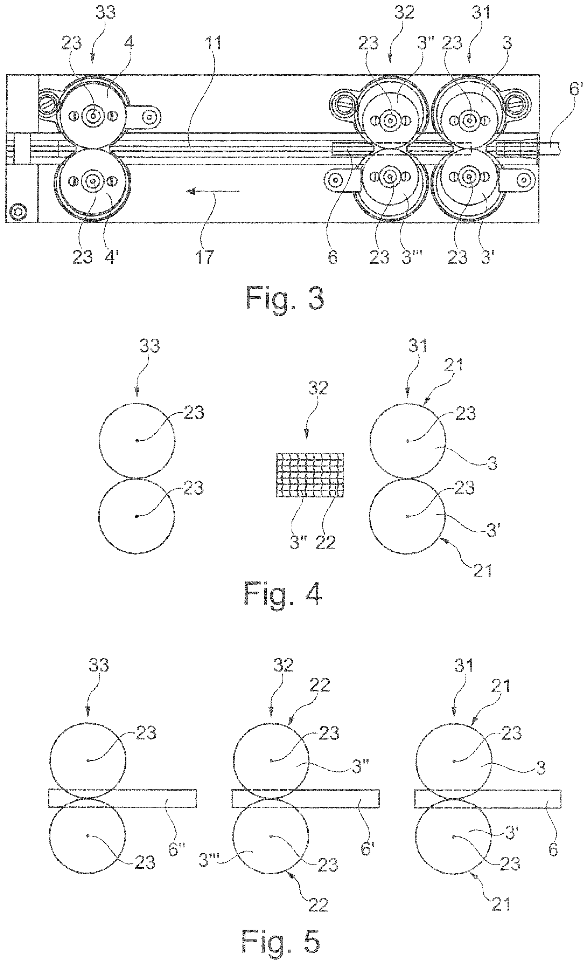

Ein Ausführungsbeispiel ist schematisch in einer Seitenansicht in Fig. 3 dargestellt. Dort ist ein erstes Bremsrollenpaar 31 umfassend die Bremsrollen 3 und 3' und gleich anschließend daran ein zweites Bremsrollenpaar 32 mit den Bremsrollen 3" und 3''' vorgesehen. Es ist erkennbar, dass der Filterstab 6 im Eingriff von beiden Bremsrollenpaaren 31 und 32 ist. Bei den Bremsrollenpaaren 31, 32 handelt es sich um beispielhafte Bremseinrichtungen. Alternativ können auch ein oder mehrere Saugrollen vorgesehen sein, welche nicht notwendig als Rollenpaar ausgestaltet sind.

In der weiteren Beschreibung wird lediglich beispielhaft auf das Ausführungsbeispiel Bezug genommen, in dem die Bremseinrichtungen als Bremsrollenpaare ausgestaltet sind.

Ist der Filterstab 6 im Eingriff beider Bremsrollenpaare 31, 32, kann ein herangeförderter Filterstab 6' zwar auch einen Impuls auf den Filterstab 6 geben. Dieser kann allerdings nicht dazu führen, dass der Filterstab 6 undefiniert in den Kanal 11 geschossen wird, so dass der Filterstab 6 nicht mehr im Eingriff mit zumindest dem zweiten Bremsrollenpaar 32 steht.

In Förderrichtung 17 stromabwärts befindet sich ein Beschleunigerrollenpaar 33 umfassend die Beschleunigerrollen 4 und 4'. Das Beschleunigerrollenpaar 33 ist wie im Stand der Technik üblich ausgestaltet.

In der Ausführungsform gemäß Fig. 3 sind die Drehachsen 23 der Bremsrollen 3, 3', 3" und 3''' parallel zueinander. In einer anderen erfindungsgemäßen Ausführungsform (siehe Fig. 4) sind die Drehachsen 23 der Bremsrollen 3 und 3' des ersten Bremsrollenpaares 31 senkrecht zu den Drehachsen 23 der Bremsrollen 3" und 3''' des zweiten Bremsrollenpaares 32.

Fig. 4 zeigt auch eine schematische Seitenansicht einer erfindungsgemäßen Empfangsvorrichtung 15. Es kann auch eine andere räumliche Zuordnung der Bremsrollenpaare vorliegen, also eine Anordnung, bei der die Drehachsen der Bremsrollen 3, 3', 3", 3''' nicht im rechten Winkel zueinander stehen, sondern in einem anderen Winkel quer zueinander. Es können auch drei Bremsrollenpaare vorgesehen sein. Insbesondere bei drei Bremsrollenpaaren, deren Drehachsen 23 jeweils quer zueinander angeordnet sind, könnte ein bevorzugter Winkel bei 60° zwischen den Drehachsen liegen.

In den Figuren 3 und 4 ist auch die erste Kontaktfläche 21 der Bremsrollen 3 und 3' und die zweite Kontaktfläche 22 der Bremsrolle 3' angedeutet. Eine entsprechende Kontaktfläche 22 existiert natürlich auch bei der Bremsrolle 3'''. Durch Verwendung von wenigstens zwei Bremsrollenpaaren kann die Rauheit der Kontaktflächen kleiner sein als im Stand der Technik üblich. Insbesondere kann ein gewisser Schlupf beim ersten Bremsrollenpaar 31 zugelassen werden, so dass insgesamt eine schonendere Behandlung der in der Empfangsvorrichtung 15 transportierten Filterstäbe 6 - 6'''' ermöglicht ist.

In den Ausführungsformen gemäß den Figuren 3 und 4 sollten die Umfangsgeschwindigkeiten der Bremsrollen 3, 3', 3" und 3''' gleich sein oder im Wesentlichen gleich sein.

In einer weiteren erfindungsgemäßen Ausführungsform, die schematisch in einer Seitenansicht in Fig. 5 dargestellt ist, ist der Abstand der Bremsrollenpaare 31 und 32 so groß, dass ein Filterstab 6, 6' oder 6" nicht gleichzeitig von zwei Bremsrollenpaaren 31 und 32 gegriffen werden kann bzw. im Eingriff mit diesem ist. In diesem Ausführungsbeispiel kann es Sinn machen, dass die Umfangsgeschwindigkeit der Bremsrollen 3 und 3' des Bremsrollenpaares 31 größer ist als die Umfangsgeschwindigkeit der Bremsrollen 3" und 3''' des Bremsrollenpaares 32. Hierdurch kann ein sehr schonender Transport in der Empfangsvorrichtung 15 vorgesehen sein.

### Bezugszeichenliste

- 1: Anschlussleitung
- 2: Bogenführung
- 3, 3', 3", 3''': Bremsrolle
- 4, 4': Beschleunigerrolle
- 5: Kanal
- 6, 6', 6", 6''', 6'''': Filterstab
- 7: Trommel
- 8: Magazin
- 9: Auffangbehälter
- 10: Bürste
- 11: Kanal
- 15: Empfangsvorrichtung
- 16: Fördereinrichtung
- 17: Förderrichtung
- 21: erste Kontaktfläche
- 22: zweite Kontaktfläche
- 23: Drehachse
- 31: erstes Bremsrollenpaar
- 32: zweites Bremsrollenpaar
- 33: Beschleunigerrollenpaar

## Patentansprüche

1. Empfangsvorrichtung (15) einer Fördereinrichtung (1, 2) für den Transport von mit Druckluft geförderten Filterstäben (6 - 6'''') der Tabak verarbeitenden Industrie, wobei die Empfangsvorrichtung (15) eine Bremsvorrichtung (31, 32) aufweist, die die Filterstäbe (6 - 6'''') abbremst, und eine Beschleunigungsvorrichtung (33) aufweist, die die Filterstäbe (6 - 6'''') beschleunigt, wobei die Beschleunigungsvorrichtung (33) in einer Förderrichtung (17) der Filterstäbe (6 - 6'''') stromabwärts der Bremsvorrichtung (31, 32) angeordnet ist, wobei die Bremsvorrichtung (31, 32) mindestens zwei Bremseinrichtungen aufweist, **dadurch gekennzeichnet, dass** die Bremseinrichtungen so ausgebildet sind, dass sie die Filterstäbe (6 - 6'''') aktiv abbremsen, wobei die Bremsvorrichtung (31, 32) zwei Bremsrollenpaare (31, 32) umfasst, wobei ein erstes Bremsrollenpaar (31) stromaufwärts eines zweiten Bremsrollenpaares (32) angeordnet ist und die beiden Bremsrollenpaare (31, 32) jeweils eine vorgebbare Umfangsgeschwindigkeit der Bremsrollen (3, 3', 3", 3''') aufweisen, wobei die Umfangsgeschwindigkeit der Bremsrollen (3, 3', 3", 3''') bei beiden Bremsrollenpaaren (31, 32) im Wesentlichen gleich oder gleich ist und die Bremsrollenpaare (31, 32) so angeordnet sind, dass jeweils ein Filterstab (6 - 6'''') zeitweise gleichzeitig im Eingriff mit dem ersten und dem zweiten Bremsrollenpaar (31, 32) ist.

2. Empfangsvorrichtung (15) nach Anspruch 1, **dadurch gekennzeichnet, dass** der Abstand der Bremsrollenpaare (31, 32) einstellbar ist.

3. Empfangsvorrichtung (15) nach Anspruch 1 oder 2, **dadurch gekennzeichnet, dass** die Drehachsen (23) der Bremsrollen (3, 3') des ersten Bremsrollenpaares (31) und die Drehachsen (23) der Bremsrollen (3", 3''') des zweiten Bremsrollenpaares (32) parallel zueinander sind.

4. Empfangsvorrichtung (15) nach Anspruch 1 oder 2, **dadurch gekennzeichnet, dass** die Drehachsen (23) der Bremsrollen (3, 3') des ersten Bremsrollenpaares (31) und die Drehachsen (23) der Bremsrollen (3", 3''') des zweiten Bremsrollenpaares (32) quer zueinander, insbesondere senkrecht zueinander, angeordnet sind.

5. Empfangsvorrichtung (15) nach einem der Ansprüche 1 bis 4, **dadurch gekennzeichnet, dass** die Bremsrollen (3, 3') des ersten Bremsrollenpaares (31) erste Kontaktflächen (21) und die Bremsrollen (3", 3''') des zweiten Bremsrollenpaares (32) zweite Kontaktflächen (22) aufweisen, wobei die Kontaktflächen (21, 22) insbesondere eine Rauheit mit einer gemittelten Rautiefe (R_{z}) von weniger als 200^{µm}, insbesondere weniger als 100 µm, aufweisen oder gummiert sind.

6. Empfangsvorrichtung (15) nach Anspruch 5, **dadurch gekennzeichnet, dass** die Rauheit der ersten Kontaktflächen (21) kleiner ist als die Rauheit der zweiten Kontaktflächen (22).

7. Einrichtung (16) zur Förderung von Filterstäben (6 - 6'''') der Tabak verarbeitenden Industrie zu einem Artikelmagazin (8) mit einer Empfangsvorrichtung (15) nach einem der Ansprüche 1 bis 6.

8. Verfahren zum Transportieren von mit Druckluft geförderten Filterstäben (6 - 6'''') der Tabak verarbeitenden Industrie, wobei die Filterstäbe (6 - 6'''') längsaxial in eine Bremsvorrichtung (31, 32) gefördert werden, und anschließend in der Bremsvorrichtung (31, 32) abgebremst werden, wobei die Filterstäbe anschließend mittels einer Beschleunigungsvorrichtung (33) in längsaxialer Förderrichtung beschleunigt werden, **dadurch gekennzeichnet, dass** in der Bremsvorrichtung (31, 32) die Filterstäbe (6 - 6"")von einem ersten Bremsrollenpaar (31) auf eine erste vorbestimmte Geschwindigkeit abgebremst werden und anschließend von einem zweiten Bremsrollenpaar (32) auf eine zweite vorbestimmte Geschwindigkeit gebracht werden, wobei die erste vorbestimmte Geschwindigkeit und die zweite vorbestimmte Geschwindigkeit im Wesentlichen gleich sind und jeweils ein Filterstab (6 - 6'''') zeitweise gleichzeitig im Eingriff mit dem ersten und dem zweiten Bremsrollenpaar (31, 32) ist.

## Claims

1. A receiving device (15) of a transport device (1, 2) for transporting filter rods (6 - 6'''') transported with compressed air of the tobacco processing industry, wherein the receiving device (15) has a brake device (31, 32) which slows down the filter rods (6 - 6''''), and has an accelerating device (33) which accelerates the filter rods (6 - 6''''), wherein the accelerating device (33) is arranged in a transport direction (17) of the filter rods (6 - 6'''') downstream of the brake device (31, 32), wherein the brake device (31, 32) has at least two brake units, **characterized in that** the brake units are configured such that they actively slow down the filter rods (6 - 6''''), wherein the brake device (31, 32) comprises two pairs of decelerating rollers (31, 32), wherein a first pair of decelerating rollers (31) is arranged upstream of a second pair of decelerating rollers (32) and the two pairs of decelerating rollers (31, 32) each have a predefinable peripheral speed of the decelerating rollers (3, 3', 3", 3'''), wherein the peripheral speed of the decelerating rollers (3, 3', 3", 3"') is substantially the same or is the same for both pairs of decelerating rollers (31, 32) and the pairs of decelerating rollers (31, 32) are arranged such that, in each case, a filter rod (6 - 6'''') is intermittently simultaneously in engagement with the first and the second pair of decelerating rollers (31, 32).

2. The receiving device (15) according to Claim 1, **characterized in that** the distance of the pairs of decelerating rollers (31, 32) can be adjusted.

3. The receiving device (15) according to Claim 1 or 2, **characterized in that** the rotational axes (23) of the decelerating rollers (3, 3') of the first pair of decelerating rollers (31) and the rotational axes (23) of the decelerating rollers (3", 3''') of the second pair of decelerating rollers (32) are parallel to one another.

4. The receiving device (15) according to Claim 1 or 2, **characterized in that** the rotational axes (23) of the decelerating rollers (3, 3') of the first pair of decelerating rollers (31) and the rotational axes (23) of the decelerating rollers (3", 3''') of the second pair of decelerating rollers (32) are arranged transversely to one another, in particular vertically to one another.

5. The receiving device (15) according to any one of Claims 1 to 4, **characterized in that** the decelerating rollers (3, 3') of the first pair of decelerating rollers (31) have first contact surfaces (21) and the decelerating rollers (3", 3"') of the second pair of decelerating rollers (32) have second contact surfaces (22), wherein the contact surfaces (21, 22) have in particular a roughness with an average roughness depth (R_{z}) of less than 200 µm, in particular less than 100 µm, or are rubberized.

6. The receiving device (15) according to Claim 5, **characterized in that** the roughness of the first contact surfaces (21) is smaller than the roughness of the second contact surfaces (22).

7. A device (16) for transporting filter rods (6 - 6'''') of the tobacco processing industry to an article hopper (8) having a receiving device (15) according to any one of Claims 1 to 6.

8. A method for transporting filter rods (6 - 6'''') transported with compressed air of the tobacco processing industry, wherein the filter rods (6 - 6'''') are transported in a longitudinally axial manner into a brake device (31, 32), and are subsequently slowed down in the brake device (31, 32), wherein the filter rods are subsequently accelerated by means of an accelerating device (33) in the longitudinal axial transport direction, **characterized in that** in the brake device (31, 32) the filter rods (6 - 6'''') are slowed down by a first pair of decelerating rollers (31) to a first predetermined speed and are subsequently brought by a second pair of decelerating rollers (32) to a second predetermined speed, wherein the first predetermined speed and the second predetermined speed are substantially the same and, in each case, a filter rod (6 - 6'''') is intermittently simultaneously in engagement with the first and the second pair of decelerating rollers (31, 32).

## Revendications

1. Dispositif de réception (15) d'un dispositif de transport (1, 2) pour le transport de tiges de filtre (6 - 6"") de l'industrie de transformation du tabac qui sont transportées avec de l'air comprimé, le dispositif de réception (15) présentant un dispositif de freinage (31, 32) qui freine les tiges de filtre (6 - 6"") et présentant un dispositif d'accélération (33). qui accélère les tiges de filtre (6 - 6""), le dispositif d'accélération (33) étant disposé en aval du dispositif de freinage (31, 32) dans une direction de transport (17) des tiges de filtre (6 - 6""), le dispositif de freinage (31, 32) présentant au moins deux dispositifs de freinage, **caractérisé en ce que** les dispositifs de freinage sont conçus de telle sorte qu'ils freinent activement les tiges de filtre (6 - 6""), le dispositif de freinage (31, 32) comprenant deux paires de rouleaux de freinage (31, 32), une première paire de rouleaux de freinage (31) étant disposée en amont d'une deuxième paire de rouleaux de freinage (32) et les deux paires de rouleaux de freinage (31, 32) présentant chacune une vitesse circonférentielle prédéterminable des rouleaux de freinage (3, 3', 3", 3"'), la vitesse circonférentielle des rouleaux de freinage (3, 3', 3", 3"') étant la même ou sensiblement la même pour les deux paires de rouleaux de freinage (31, 32) et les paires de rouleaux de freinage (31, 32) sont disposées de telle sorte qu'une tige de filtre (6 - 6"") est à la fois simultanément en prise avec la première et la deuxième paire de rouleaux de freinage (31, 32).

2. Dispositif de réception (15) selon la revendication 1, **caractérisé en ce que** la distance entre les paires de rouleaux de freinage (31, 32) est réglable.

3. Dispositif de réception (15) selon la revendication 1 ou la revendication 2, **caractérisé en ce que** les axes de rotation (23) des rouleaux de freinage (3, 3') de la première paire de rouleaux de freinage (31) et les axes de rotation (23) des rouleaux de freinage (3", 3"') de la deuxième paire de rouleaux de freinage (32) sont parallèles entre eux.

4. Dispositif de réception (15) selon la revendication 1 ou la revendication 2, **caractérisé en ce que** les axes de rotation (23) des rouleaux de freinage (3, 3') de la première paire de rouleaux de freinage (31) et les axes de rotation (23) des rouleaux de freinage (3", 3"') de la deuxième paire de rouleaux de freinage (32) sont disposés transversalement les uns par rapport aux autres, notamment perpendiculairement les uns aux autres.

5. Dispositif de réception (15) selon l'une des revendications 1 à 4, **caractérisé en ce que** les rouleaux de freinage (3, 3') de la première paire de rouleaux de freinage (31) présentent des premières surfaces de contact (21) et les rouleaux de freinage (3", 3"') de la deuxième paire de rouleaux de freinage (32) présentent des deuxièmes surfaces de contact (22), les surfaces de contact (21, 22) présentant en particulier une rugosité avec une profondeur de rugosité moyenne (R_{z}) inférieure à 200 µm, en particulier inférieure à 100 µm, ou étant caoutchoutées.

6. Dispositif de réception (15) selon la revendication 5, **caractérisé en ce que** la rugosité des premières surfaces de contact (21) est inférieure à la rugosité des deuxièmes surfaces de contact (22).

7. Dispositif (16) pour transporter des tiges de filtre (6 - 6"") de l'industrie de transformation du tabac vers un magasin d'articles (8), comprenant un dispositif de réception (15) selon l'une quelconque des revendications 1 à 6.

8. Procédé de transport de tiges de filtre (6 - 6"") de l'industrie de transformation du tabac, qui sont transportées avec de l'air comprimé, dans lequel les tiges de filtre (6 - 6"") sont transportées longitudinalement et axialement dans un dispositif de freinage (31, 32) et sont ensuite freinées dans le dispositif de freinage (31, 32), dans lequel les tiges de filtre sont ensuite accélérées dans la direction de transport longitudinale et axiale au moyen d'un dispositif d'accélération (33), **caractérisé en ce que** dans le dispositif de freinage (31, 32), les tiges de filtre (6 - 6"") sont freinées à une première vitesse prédéterminée par une première paire de rouleaux de freinage (31) et sont ensuite amenées à une deuxième vitesse prédéterminée par une deuxième paire de rouleaux de freinage (32), la première vitesse prédéterminée et la deuxième vitesse prédéterminée étant sensiblement égales et une tige de filtre (6 - 6"") étant à la fois simultanément en prise avec la première et la deuxième paire de rouleaux de freinage (31, 32).
